# EUROPEAN PATENT APPLICATION

(11) **EP 0 849 114 A1**
(43) Date of publication of application: **24.06.1998**
(21) Application number: 97203653.7
(22) Date of filing: 21.11.1997
(51) Int. Cl.: B60P 1/44

(54) **Improvements to loading devices for transport vehicles**

(30) Priority: 17.12.1996 BE 9601049
(71) Applicant: Dhollander, Jan Jozef Prudence, 9160 Lokeren (BE); Derie, Pol Jan Lode, 9111 Belsele (BE)
(72) Inventor: Dhollander, Jan Jozef Prudence, 9160 Lokeren (BE); Derie, Pol Jan Lode, 9111 Belsele (BE)
(74) Representative: Donné, Eddy

(57) **Abstract**

Improvements to loading devices of transport vehicles of the type consisting of two guiding elements which are fixedly connected to the vehicle, which guiding elements are situated at opposite sides of the loading opening of the transport vehicle, and movable parts which, by means of hydraulic or pneumatic driving means, can move up and down vertically in the aforementioned guiding elements, and at which a loading flap is attached in a hingeable manner, characterized in that they consist of cables (10-11) which connect the movable parts (5-6) at one side of the transport vehicle (1) with a fixed part at the other side of the transport vehicle (1), for example, a guiding element (4-3).

## Description

The present invention relates to improvements to loading devices for transport vehicles, more particularly loading devices of the type consisting of two guiding elements which are fixedly connected to the vehicle, which guiding elements are situated at opposite sides of the loading opening of the transport vehicle, and movable parts which, by means of suitable driving means, such as hydraulic or pneumatic driving means, a cable or the like, can move up and down vertically in the aforementioned guiding elements, and at which a platform is attached in a hingeable manner.

In these known loading devices, the aforementioned vertical driving means of the movable parts are formed by pressure cylinders.

A disadvantage of these known loading devices is that the aforementioned pressure cylinders very often effect unevenly onto movable parts at which the loading flap is attached, as a result of which an abnormal friction and torsion are caused which, in their turn, result in an uneven wear and tear between the aforementioned guiding elements which form part of the frame of the transport vehicle and the aforementioned movable parts, on one hand, and in the hinge axes of the pressure cylinders with the movable parts and with the loading flap, on the other hand.

This uneven effect may also cause movable parts of the construction to get stuck because the platform is drawn into an inclined position laterally.

In order to overcome the uneven run of the aforementioned pressure cylinders, the application of a pressure cylinder or flow separator has already been proposed, however, this is not only an expensive solution, but it also necessitates complicated hydraulic circuits.

Thus, the present invention has as an object improvements to loading devices for transport vehicles which exclude the aforementioned and other disadvantages.

To this aim, these improvements consist of cables which connect the movable parts at one side of the transport vehicle to the other movable part at the other side of the transport vehicle.

Hereby is noted that the aforementioned cables do not have to take up any forces but only serve for guaranteeing the synchronicity of the lifting means at each side of the vehicle, respectively, at each side of the loading flap.

When these improvements are applied in loading devices whereby the loading flap is moved from the ground up to above the loading floor of the transport vehicle, the aforementioned cable connections shall be provided at the height of the level of the roof edge.

With the intention of better showing the characteristics of the invention, several preferred forms of embodiment are described hereafter, by way of example only and without any limitative character, with reference to the accompanying drawings, wherein:
figure 1 in perspective shows the improvements according to the invention;
figure 2 shows a view according to arrow F2 in figure 1;
figure 3, on a larger scale and with more particularities, shows the part which is indicated by F3 in figure 2;
figure 4 is a view similar to that of figure 2, but for a second higher position of the loading flap;
figure 5, on a larger scale, shows a cross-section according to line V-V in figure 4;
figure 6 shows a view according to arrow F6 in figure 5;
figures 7 and 8 respectively show cross-sections according to lines VII-VII and VIII-VIII in figure 5;
figure 9 in perspective shows the improvements according to the invention, applied to a variant of the embodiment of figure 1;
figure 10 shows a second position of figure 9.

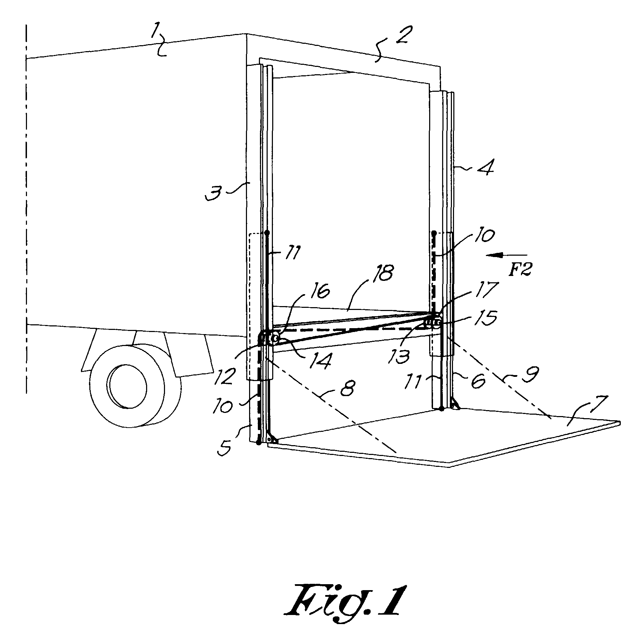

In figure 1, the rear part of a transport vehicle 1 is shown in a schematic manner, the rear wall 2 of which is provided with vertical guiding elements, 3 and 4 respectively, wherein movable parts 5 and 6 can be moved vertically by means of pressure cylinders, for clarity's sake not shown in the drawings, or any other mechanism which can realize such vertical movement of the movable parts in the vertical guiding elements.

The movable parts 5 and 6 are, at the bottom, connected hingeably in a suitable manner to a platform 7, whereby between this platform 7 and the movable parts, hydraulic or pneumatic pressure cylinders are provided which are indicated in figure 1 schematically by 8, 9 respectively.

The improvements according to the invention consist in that at each of the movable parts 5 and 6, a cable is fixed, respectively 10 and 11.

The cable 10 is guided, starting from the lower part of the movable part 5, over a first guiding roller 12 and a second guiding roller 13 which are arranged freely rotatable at a shaft 14, 15 respectively, which is fixed at the frame of the loading flap, whereas the second extremity of the cable 10 is connected to the second movable part 6.

The cable 11, in its turn, is guided from the lower part of the movable part 6 over a guiding roller 17 and a second guiding roller 16 in order to be connected with its second extremity to the aforementioned movable part 5.

As becomes clear from figure 1, the cables 10 and 11 are arranged in such a manner that they cross each other between the pairs of rollers 12-13 and 16-17.

The functioning of the improvements according to the invention is very simple and as follows.

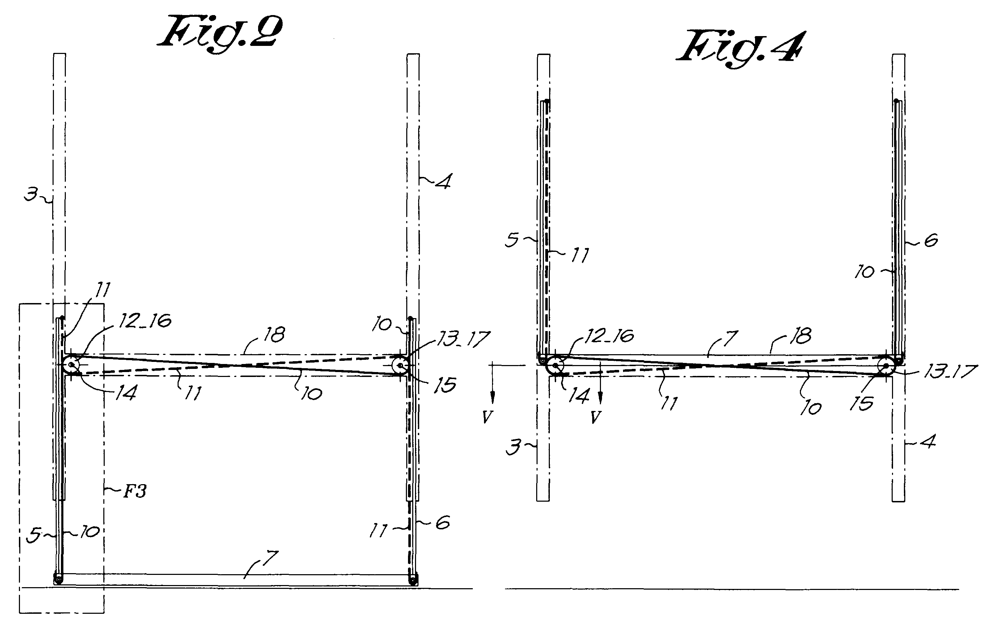

When the loading flap is situated in its lowest position, as shown in the figures 1 and 2, the movable parts 5 and 6 are also situated in their lowest position. When, by means of the driving means, not shown in the drawings, which normally are mounted in the movable parts 5-6, in the guiding elements 3 and 4, respectively, the loading flap or platform 7 is actuated, the loading flap 7 will move into a higher position, for example, up to the height of the loading floor 18 of the transport vehicle 1, whereby the movable parts 5 and 6 are moved upwards in the guiding elements 3 and 4.

Vice versa, in order to move the platform 7 from the highest position to the lowest position, the movable parts 5 and 6 will be shifted downwards in the guiding elements 3 and 4.

During this movement in height of the platform 7, according to the invention, the cables 10 and 11 will provide for that the movement of the movable part 5 is completely identical to the movement of the part 6, as a result of which any torsion of the whole unit is excluded and as a result of which abnormal friction and, therefore, abnormal wear and tear are also excluded.

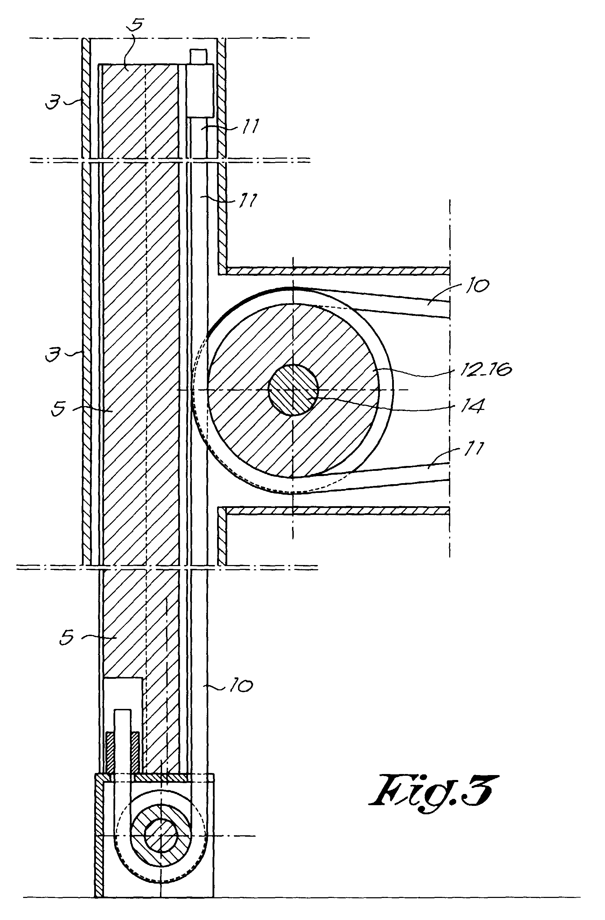

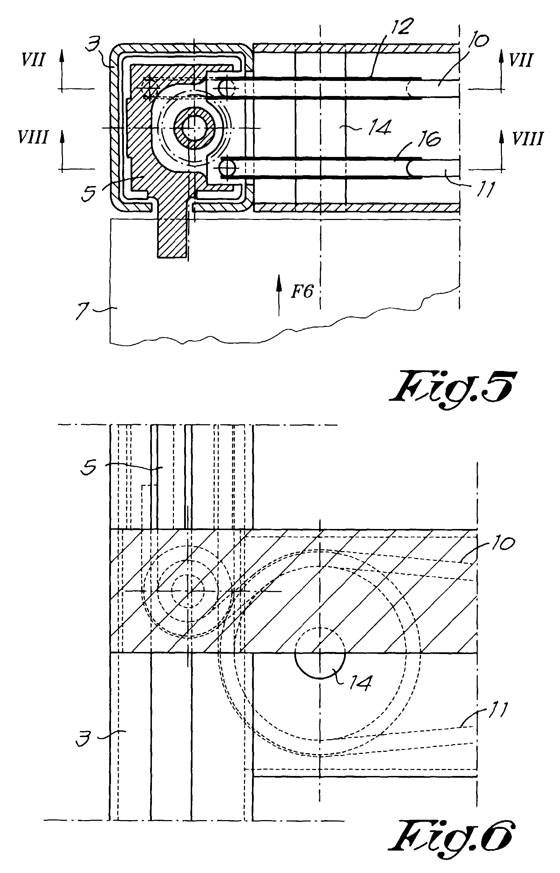

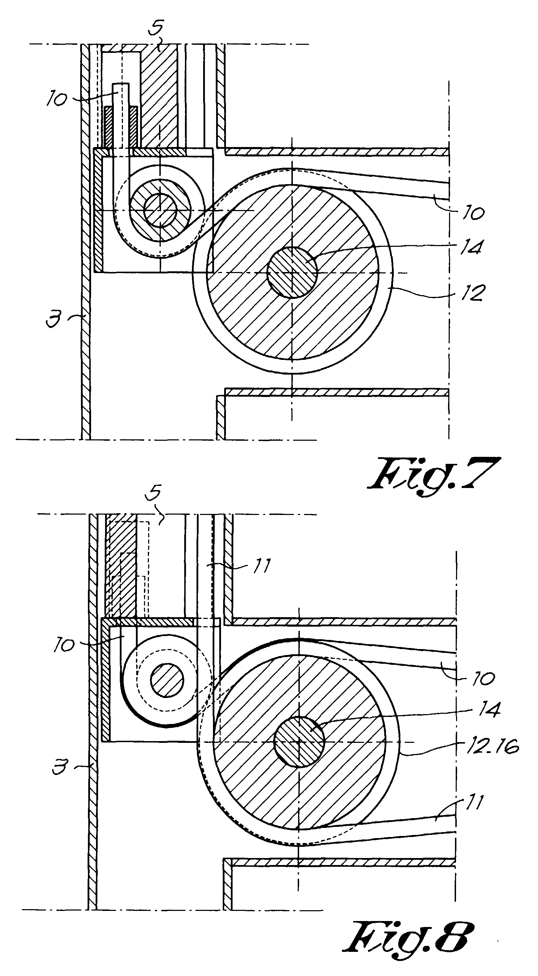

In the figures 3 to 8, constructional details of the attachment of the cables 10-11 and the positioning of the pairs of guiding rollers 12-13 and 16-17 are shown.

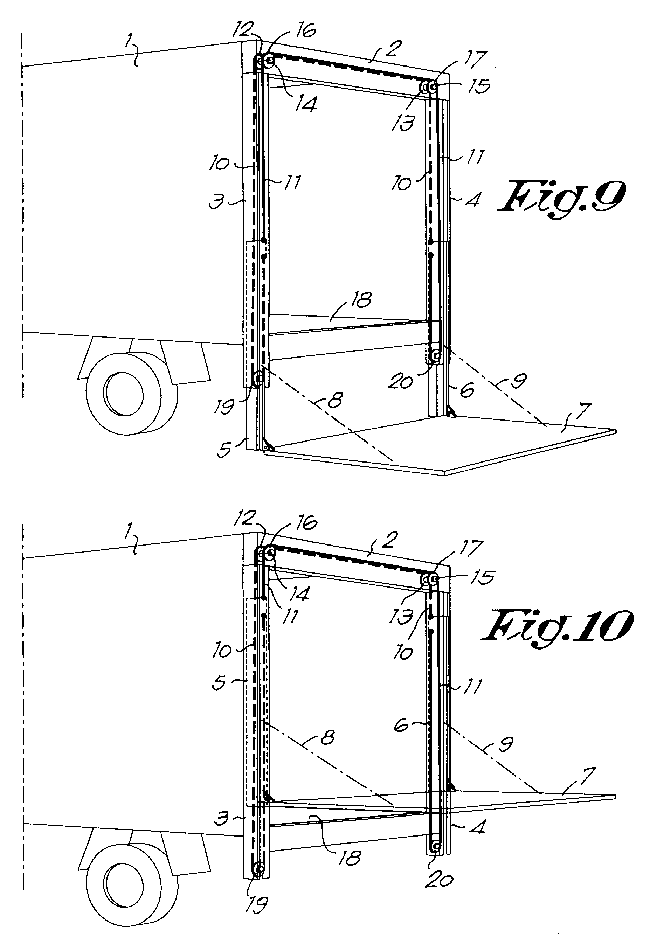

In the figures 9 and 10, finally, an embodiment is shown whereby it is intended to move the platform 7 over a greater height than from the ground up to the loading floor 18. In this case, the pairs of guiding rollers 12-13 and 16-17 will be provided on top of the transport vehicle, more particularly above the upper extremity of the guiding elements 3 and 4, and for each cable 10-11 another guiding roller, more particularly a deflection roller, 19 and 20, respectively, will be provided below.

Also in this case, an extremity of the cables 10 and 11 will be connected to the movable parts 5-6, and the other extremity of the cables 10-11 will also be connected to these movable parts 6 and 5. Also in this case, it is obtained that during the vertical movement of the loading flap 7, all elements of the loading device always move identically at the left and at the right hand side of the transport vehicle, so that no abnormal frictions and wear and tear can occur.

It is obvious that the present invention is in no way limited to the embodiments described by way of example and shown in the accompanying drawings, on the contrary may these improvements be applied in various forms and dimensions without leaving the scope of the invention.

## Claims

1. Improvements to loading devices for transport vehicles of the type consisting of two guiding elements which are fixedly connected to the vehicle, which guiding elements are situated at opposite sides of the loading opening of the transport vehicle, and movable parts which, by means of suitable driving means, can move up and down vertically in the aforementioned guiding elements, and at which a platform is attached in a hingeable manner, characterized in that they consist of cables (10-11) which connect the movable parts (5-6) at one side of the transport vehicle (1) to the movable parts (6-5) at the other side of the transport vehicle (1).

2. Improvements according to claim 1, characterized in that the cables (10-11) are attached at the lower extremity of a movable part (5-6); that they are guided over guiding rollers (12), (16) respectively, which are arranged freely rotatable in respect to the loading flap unit; that the cables (10-11) subsequently are guided to the other side of the vehicle (1) in order to be finally guided at this latter side over guiding rollers (13), (17) respectively, and that they are finally connected with their second extremity to the upper extremity of the other movable part (6-5).

3. Improvements according to claim 1, characterized in that the cables (10-11) are attached below at the movable part (5-6); that they are guided over guiding rollers (19), (20) respectively, which are arranged freely rotatable in respect to the loading flap unit; that the cables (10-11) subsequently are brought to the level of the roof edge of the vehicle (1) and finally are guided over guiding rollers (12-13), (16-17) respectively; and that these cables (10-11) with their second extremity finally are connected to the upper extremity of the movable parts (6), (5) respectively.

4. Improvements according to claim 2, characterized in that the cables (10-11) cross each other in the middle of the vehicle (1).

5. Improvements according to claim 1, 2 or 4, characterized in that the cables (10-11) cross each other at the height of the loading floor (18) of the transport vehicle (1).

6. Improvements according to claim 2 or 3, characterized in that the guiding rollers (12-17), on one hand, and (13-16), on the other hand, are arranged freely rotatable on a common shaft, respectively (14-15).
